# EUROPEAN PATENT APPLICATION

(11) **EP 1 980 177 A1**
(43) Date of publication of application: **15.10.2008**
(21) Application number: 07021721.1
(22) Date of filing: 08.11.2007
(51) Int. Cl.: A47C 7/40

(54) **Chair having shape memory sponge mounted on back rest**

(30) Priority: 13.04.2007 KR 20070036665
(71) Applicant: Elite Furniture Co., Ltd., Unsan-myeon Seosan-si Chungcheongnam-do (KR); Park, Yun-Kyoung, 107-403 Indeokwon Samsung Apt. Gwanyang 2-dong Dongan-gu Anyang-si Gyeonggi-do (KR)
(72) Inventor: Park, Yun-Kyoung, Dongan-gu, Anyang-si, Gyeonggi-do (KR)
(74) Representative: Wagner, Bernhard Peter

(57) **Abstract**

The present invention relates to a chair having a shape memory sponge mounted on a back rest (20), the chair having a seat (10), the back rest (20), and a leg part (30) for supporting the seat and the back rest, wherein the back rest includes a cut hole (22a) formed cut off vertically to a given depth at both sides with respect to the center portion of the front surface thereof, a back rest cushion (26) insertedly mounted in each of the cut holes in such a manner as to be protruded to a given height toward a user's back, the back rest cushion (26) being formed of the shape memory sponge, and a fixing plate (28) mounted at the rear side of each of the cut holes.

## Description

### BACKGROUND OF THE INVENTION

### Field of the Invention

The present invention relates to a chair, and more particularly, to a chair having a shape memory sponge mounted on a back rest that can safely protect a user's spine and can be used by all of peoples irrespective of their physical constitutions.

### Background of the Related Art

Generally, a chair, which is a piece of furniture for a user to sit on at general houses or offices, includes a seat for supporting the user's hips, a back rest connected to the seat to support the user's back, and a leg part for supporting the seat and the back rest.

Thus, the chair has been considered to be a tool on which a user can supportingly rests his or her body when he or she studies or works, but recently, it is considered to be a piece of furniture providing comfortable and cozy feelings to the user so that he or she can obtain high study or work efficiencies. As a result, there have been proposed ergonomic chairs having a seat, a back rest, and a leg part wherein various techniques are adopted.

Especially, there have been proposed a variety of chairs having an improved back rest so as to protect a user's spine as one of important regions in the human body.

However, the conventional chairs have a generally semi-circular back rest, which fails to safely support a user's spine and back, thereby making him or her feel uncomfortable while sitting thereon. Alternatively, they have two separated back rest portions, which unnecessarily makes the volume of the chair bulky, thereby decreasing a space utilization efficiency at an office and making the back rest portions easily broken.

### SUMMARY OF THE INVENTION

Accordingly, the present invention has been made in view of the above-mentioned problems occurring in the prior art, and it is an object of the present invention to provide a chair having a shape memory sponge mounted on a back rest wherein the back rest is provided with the shape memory sponge mounted on a portion abutting with a user's spine, thereby safely protecting his or her spine and further making him or her feel comfortable while sitting thereon.

It is another object of the present invention to provide a chair having a shape memory sponge mounted on a back rest wherein the shape memory sponge of the back rest abutting with a user's spine is improved so that even if the user moves in every direction, good contacting forces of the shape memory sponge with the user's spine are obtained.

It is still another object of the present invention to provide a chair having a shape memory sponge mounted on a back rest wherein the back rest is rigidly formed, without having any deformation, thereby preventing the back rest from being easily broken or damaged.

To accomplish the above objects, according to the present invention, there is provided a chair having a shape memory sponge mounted on a back rest, the chair having a seat, the back rest, and a leg part for supporting the seat and the back rest, wherein the back rest includes a cut hole formed cut off vertically to a given depth at both sides with respect to the center portion of the front surface thereof, a back rest cushion insertedly mounted in each of the cut holes in such a manner as to be protruded to a given height toward a user's back, the back rest cushion being formed of the shape memory sponge, and a fixing plate mounted at the rear side of each of the cut holes.

According to the present invention, preferably, the back rest cushion is rounded along the front surface thereof such that a portion near the user's spine is formed high to a given height and a predetermined curve radius is set toward the user's side.

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG.1 is a perspective view showing a chair having a shape memory sponge mounted on a back rest according to a first embodiment of the present invention;

FIG.2 is an exploded perspective view showing the chair of FIG.1;

FIG.3 is a sectional view taken along the line A-A' of FIG.1;

FIG.4 is a sectional view taken along the line B-B' of FIG.1;

FIG.5 is a perspective view showing a chair having a shape memory sponge mounted on a back rest according to a second embodiment of the present invention;

FIG.6 is an exploded perspective view showing the chair of FIG.5;

FIG.7 is a sectional view taken along the line A-A' of FIG.5; and

FIG.8 is a sectional view taken along the line B-B' of FIG.5.

### DETAILED DESCRIPTION OF THE PREFERRED EMBODIMENT

Hereinafter, an explanation of a chair having a shape memory sponge mounted on a back rest according to a first embodiment of the present invention will be given with reference to the attached drawings.

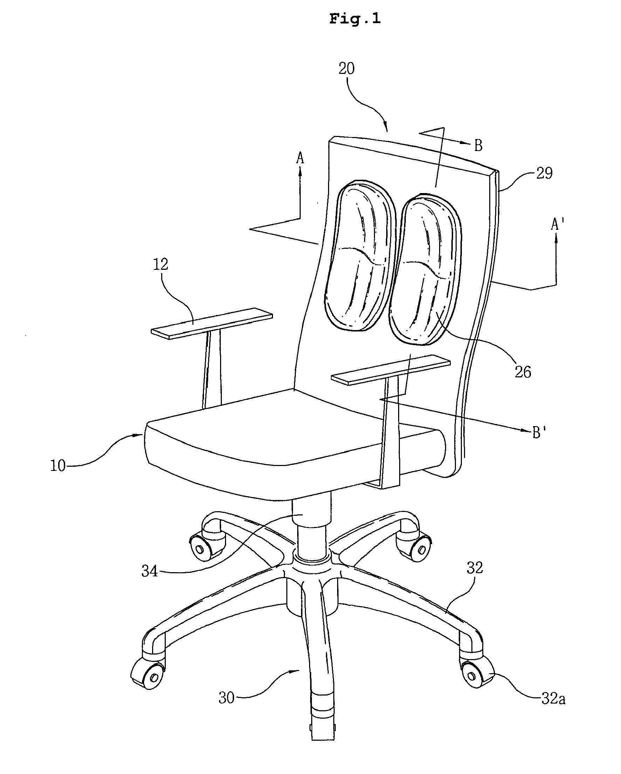

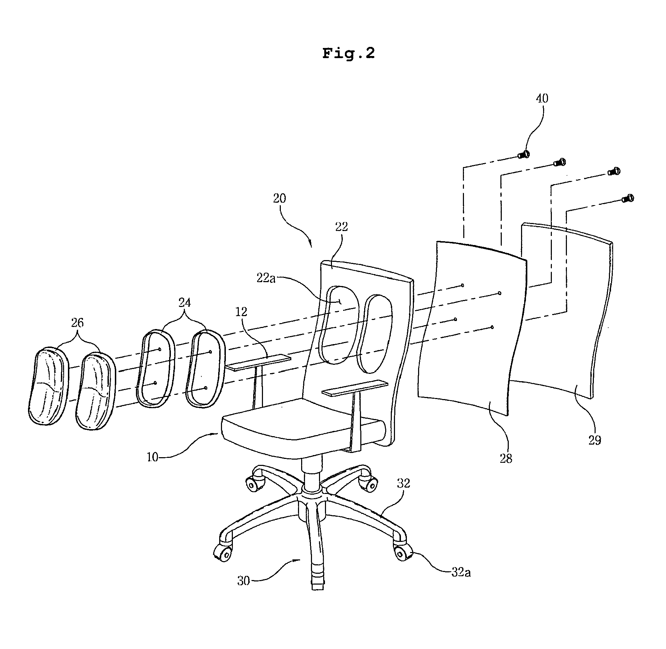

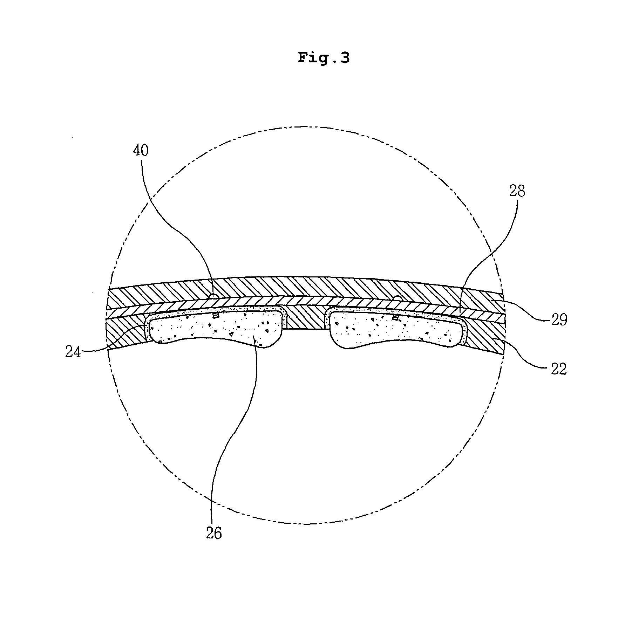

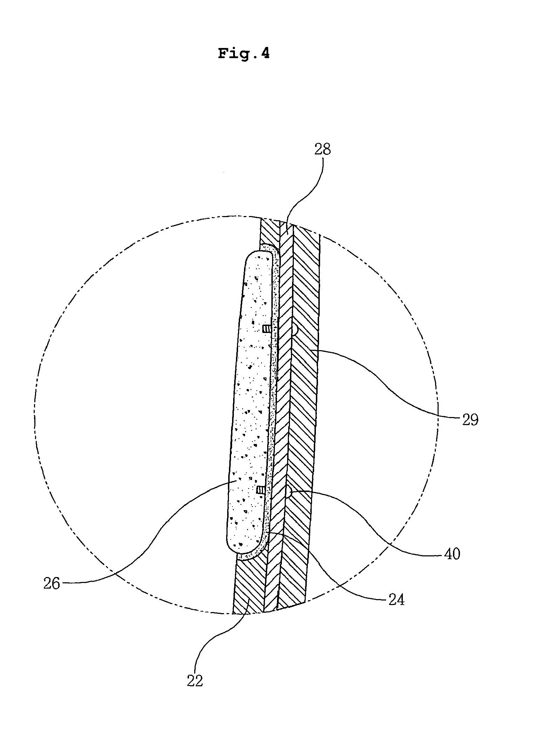

FIG.1 is a perspective view showing a chair having a shape memory sponge mounted on a back rest according to a first embodiment of the present invention, FIG.2 is an exploded perspective view showing the chair of FIG.1, FIG.3 is a sectional view taken along the line A-A' of FIG.1, and FIG.4 is a sectional view taken along the line B-B' of FIG.1.

According to a first embodiment of the present invention, there is provided a chair having a shape memory sponge mounted on a back rest, the chair including a seat 10 abutting with the user's hips, a back rest 20 connected to the seat 10 at one side thereof and extended upwardly so as to support the user's back, and a leg part 30 supporting the seat 10 and the back rest 20.

The seat 10 is formed by covering a soft and comfortable material on the floor surface abutting with the user's hips, so as to provide a good feeling when the user sits thereon.

An arm rest 12 is formed on the both sides of the seat 10, for supporting the user's arm, so that when the user takes a rest or does not use his or her hands, he or she can sit on the chair comfortably.

The back rest 20 includes a back rest frame 22 having a cut hole 22a formed cut off vertically to a given depth at both sides with respect to the center portion of the front surface thereof, an auxiliary back plate 24 insertedly disposed on each of the cut holes 22a, and a back rest cushion 26 insertedly mounted on the auxiliary back plate 24 in such a manner as to be protruded to a given height toward the user's back.

As shown in FIGS.1 and 2, the back rest frame 22 is formed such that a portion abutting with the user's waist is rounded to a predetermined curve radius toward the front surface thereof and a portion abutting with the user's back is rounded to a predetermined curve radius toward the back surface thereof. Thus, when viewed from the sides, the back rest frame 22 takes a shape similar to an S shape or an inverse-S shape in its entirety.

A fixing plate 28, which is made of plywood or PVC, is mounted on the rear side of the back rest frame 22.

The auxiliary back plate 24 is disposed between the back rest cushion 26 and the fixing plate 28 and is adapted to fit into the cut hole 22a. The auxiliary back plate 24 is made of PVC, wood, or metal.

The auxiliary back plate 24 has a shape similar to a vessel opened at the front surface thereof, such that the front surface and the inner both sides thereof come into close contact with the back surface and both sides of the back rest cushion 26 and the back surface and the outer both sides thereof come into close contact with the front surface of the fixing plate 28 and the inner sides of the cut holes 22a.

At this time, the auxiliary back plate 24 and the back rest cushion 26 come into close contact with each other by means of environment-friendly adhesive, and the auxiliary back plate 24 and the fixing plate 28 come into close contact with each other by means of bolts 40, which reduces a degree of environment pollution in a work place making the chair and provides good sanitation conditions to the user.

On the other hand, the auxiliary back plate 24 and the fixing plate 28 are fastened by means of the bolts 40, so that when the back rest 20 of the chair is viewed at the rear side thereof, the head portions of the bolts 40 are necessarily seen to the outside. In this case, the user may hurt by means of the head portions of the bolts 40, and the outer appearance of the chair may be deteriorated badly. To solve these problems, thus, a rear plate 29 that has the same area as the back rest frame 22 is further provided on the rear side of the fixing plate 28, so as not to expose the head portions of the bolts 40 to the outside.

The rear plate 29 further serves to increase the entire strength of the chair so as to prevent the chair from being broken when the user takes an arbitrary posture on the chair.

The back rest cushion 26 is formed of a shape memory sponge which is called 'memory foam'. As shown in FIG.3, further, the back rest cushion 26 is rounded along the front surface thereof such that a portion near the user's spine is formed high to a given height and a predetermined curve radius is set toward the user's side.

The back rest cushion 26 is formed flat on the rear surface thereof, and when coupled to the auxiliary back plate 24 by means of adhesive, it can be rigidly attached thereon. Also, the corner portions of the respective surfaces of the back rest cushion 26 are rounded, thereby making the user feel comfortable while sitting thereon.

The leg part 30 has a plurality of support legs 32 formed at a given angle, each of the support legs 32 having a caster 32a mounted thereon for moving the chair in every direction, and has hydraulic rod 34 disposed at the top side of the central portion of the support legs 32 in such a manner as to abut with the bottom surface of the seat 10 for adjusting the height of the seat 10.

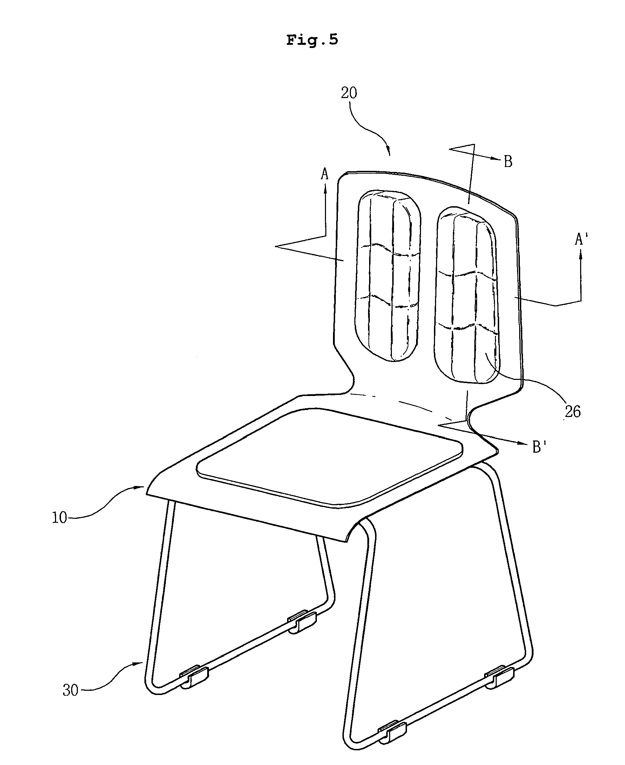

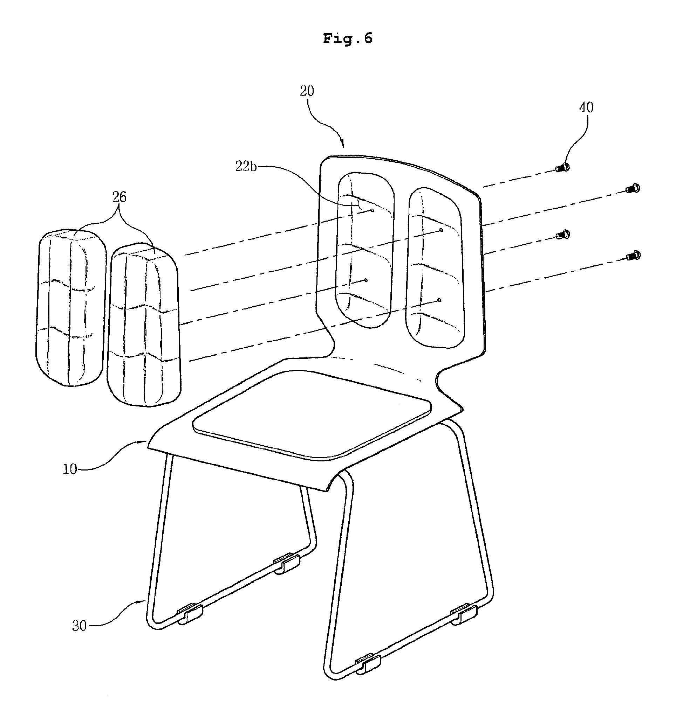

On the other hand, the chair having a shape memory sponge mounted on a back rest is not limited to the first embodiment of the present invention as shown in FIGS.1 to 4, but may be applied to the second embodiment of the present invention as shown in FIGS.5 and 6.

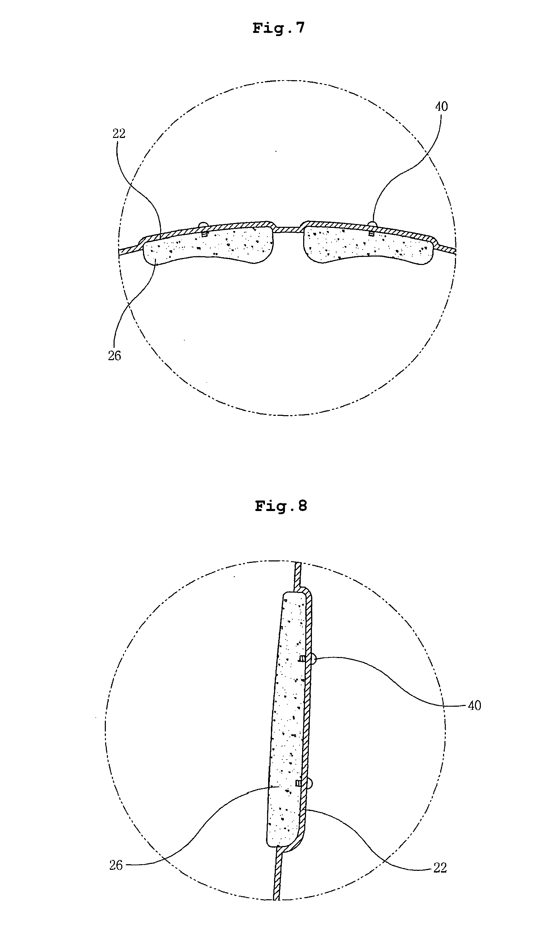

FIG.5 is a perspective view showing a chair having a shape memory sponge mounted on a back rest according to a second embodiment of the present invention, FIG.6 is an exploded perspective view showing the chair of FIG.5, FIG.7 is a sectional view taken along the line A-A' of FIG.5, and FIG.8 is a sectional view taken along the line B-B' of FIG.5.

According to the second embodiment of the present invention, there is provided a chair having a shape memory sponge mounted on a back rest, the chair including a seat 10 abutting with the user's hips, a back rest 20 connected to the seat 10 at one side thereof and extended upwardly so as to support the user's back, and a leg part 30 supporting the seat 10 and the back rest 20.

The back rest 20 includes a back rest frame 22 connected to the seat 10 in such a manner as to be extended upwardly, the back rest frame 22 having a concave recess 22b formed concaved vertically to a given depth at both sides with respect to the center portion of the front surface thereof, and a back rest cushion 26 insertedly mounted on each of the concave recesses 22b in such a manner as to be protruded to a given height toward the user's back. At this time, the back rest cushion 26 and the concave recess 22b are coupled by means of bolts, so that the head portions of the bolts are exposed to the rear surface of the concave recess 22b.

In the same manner as the back rest cushion as shown in FIGS.1 to 4, the back rest cushion 26 as shown in FIGS.5 to 8 is formed of the shape memory sponge and is rounded along the front surface thereof such that a portion near the user's spine is formed high to a given height and a predetermined curve radius is set toward the user's side.

On the other hand, the seat and the leg part of the chair as shown in FIGS.5 to 8 have the same structure as conventional practices, and an explanation on them will be avoided for the brevity of the description.

As set forth in the foregoing, according to the present invention, there is provided a chair having a shape memory sponge mounted on a back rest wherein a back rest cushion is made of the shape memory sponge, which allows the chair to be provided to all of peoples irrespective of their physical constitutions and prevents the back rest cushion from being flat or squeezed after long period of usage, as the shape memory sponge senses the weight and body temperature of the user and is appropriately varied in accordance with the shapes of the human body.

Moreover, the back rest cushion is rounded along the front surface thereof such that a portion near the user's spine is formed high to a given height and a predetermined curve radius is set toward the user's side, which stably protecting the user's spine and gives high close contacting forces even when the user moves in every direction, thereby making him or her feel comfortable while sitting thereon.

Further, an auxiliary back plate on which the back rest cushion is attached is fastened to a fixing plate by means of bolts, so that the back rest cushion can be easily replaced to new one, if necessary, thereby obtaining resource saving effects.

In addition, a rear plate is further provided on the fixing plate having the head portions of the bolts exposed to the outside, thereby ensuring high safety of the user and also improving the outer appearance of the chair.

Furthermore, the back rest cushion is stably fixed on the back rest frame and the fixing plate, thereby overcoming the problem that the back rest is often broken in the conventional practices.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A chair having a shape memory sponge mounted on a back rest, the chair having a seat, the back rest, and a leg part for supporting the seat and the back rest, wherein the back rest includes a cut hole formed cut off vertically to a given depth at both sides with respect to the center portion of the front surface thereof, a back rest cushion insertedly mounted in each of the cut holes in such a manner as to be protruded to a given height toward a user's back, the back rest cushion being formed of the shape memory sponge, and a fixing plate mounted at the rear side of each of the cut holes.

2. The chair having a shape memory sponge mounted on a back rest according to claim 1, wherein the back rest cushion is rounded along the front surface thereof such that a portion near the user's spine is formed high to a given height and a predetermined curve radius is set toward the user's side.

3. The chair having a shape memory sponge mounted on a back rest according to claim 1 or 2, wherein an auxiliary back plate is disposed between the back rest cushion and the cut hole in such a manner that the front surface thereof comes into close contact with the back surface and both sides of the back rest cushion and the back surface thereof comes into close contact with the front surface of the fixing plate.

4. The chair having a shape memory sponge mounted on a back rest chair according to claim 3, wherein the back rest cushion and the auxiliary back plate are coupled with each other by means of environment-friendly adhesive, and the auxiliary back plate and the fixing plate are fastened to each other by means of bolts.

5. The chair having a shape memory sponge mounted on a back rest chair according to claim 4, wherein the back rest has a rear plate mounted on the rear surface thereof.

6. A chair having a shape memory sponge mounted on a back rest, the chair having a seat, the back rest, and a leg part for supporting the seat and the back rest, wherein the back rest includes a concave recess formed cut off vertically to a given depth at both sides with respect to the center portion of the front surface thereof, and a back rest cushion insertedly mounted on each of the concave recesses in such a manner as to be protruded to a given height toward a user's back, the back rest cushion being formed of the shape memory sponge.

7. The chair having a shape memory sponge mounted on a back rest according to claim 6, wherein the back rest cushion is fastened to the concave recess by means of bolts.
